# EUROPEAN PATENT APPLICATION

(11) **EP 4 480 658 A1**
(43) Date of publication of application: **25.12.2024**
(21) Application number: 24171841.0
(22) Date of filing: 23.04.2024
(51) Int. Cl.: B28B 1/00, B28B 11/00, B28B 15/00, B32B 37/12, B32B 37/15, C04B 28/00, E04C 1/40, E04C 2/04, B32B 7/12, B32B 9/00, B32B 13/04, E01C 5/22, E04C 2/26, E04F 13/14

(54) **A METHOD FOR MANUFACTURING CERAMIC-CONCRETE BUILDING ELEMENTS AND A CERAMIC-CONCRETE BUILDING ELEMENT**

(30) Priority: 22.06.2023 PL 44532223
(71) Applicant: CRUSIL Sp. z o.o., 97-215 Inowlodz (PL)
(72) Inventor: ZEREK, Mariusz, 97-213 Smardzewice (PL)
(74) Representative: Kancelaria Eupatent.pl Sp. z.o.o

(57) **Abstract**

A method for manufacturing a ceramic-concrete building element, characterized in that the method comprises: applying (3) a strip of a polymeric sealing compound (14, 24A, 24B) along a perimeter of a mounting surface of a ceramic tile (12, 22A, 22B); and applying (4, 5), to a central part of the mounting surface of the ceramic tile (12, 22A, 22B), the central part being previously surrounded by the strip of the polymeric sealing compound (14, 24A, 24B), a bonding compound (13, 23) and a previously formed concrete element (11, 21A, 21B).

## Description

### TECHNICAL FIELD

The present invention relates to a method for manufacturing ceramic-concrete building elements and to a ceramic-concrete building element itself, such as a stair block or a layered slab.

### BACKGROUND

Ceramic tiles are widely utilized in the construction industry as cladding elements affixed to concrete structures. For instance, ceramic tiles can function as cladding for stair treads or as coverings for flat surfaces with a concrete substructure. The installation of ceramic tiles, especially outdoors where long-term durability is crucial, is a complex process. The durability of the joint depends on numerous variables, including the method of substrate preparation, the quality of materials used, the type and application method of adhesives, the type of grout used to seal the flat surfaces to prevent water infiltration beneath the ceramic tiles, and the skill and experience of the craftsmen performing the installation. Deficiencies during installation can lead to the rapid deterioration of the joint between the ceramic tile and the concrete structure, particularly in winter when cyclic freezing and thawing occur. Water seeping under the ceramic tiles through gaps can lead to the destruction of the joint between the tiles and the concrete structure.

One approach to mitigating these issues is the use of prefabricated ceramic-concrete elements, which integrate a ceramic and concrete layer atop a permeable substructure. With this approach, water is channeled from the surface through the gaps between individual slabs directly into the ground, thus preventing damage to the slab when the ambient temperature falls below freezing. However, permanently bonding two materials with disparate thermal expansion characteristics and accommodating the shrinkage of concrete during hydration present significant challenges to the production of ceramic-concrete slabs.

Current technologies for affixing ceramic tiles to a concrete slab exhibit various deficiencies that compromise the quality of the final product. For instance, European patent EP3112331B1 discloses a method for producing a layered slab by positioning a ceramic tile in a mold with a pre-applied polymer layer to enhance adhesion, followed by backfilling the mold with an open-textured concrete layer and forming the element through vibro-compaction. A drawback of this method is the relatively low resistance to destruction of the element thus produced, attributable to the type of concrete used, which is primarily designed to mitigate hydration shrinkage. Bending strength is a crucial parameter for building elements used in landscaping, particularly in areas subject to point loading or where the substructure is inadequately constructed. The employment of open-graded concrete in connection with a ceramic tile restricts its strength, and achieving the desired breaking strength necessitates an increase in the thickness of the slab.

The 'kera twice' method, developed by the Dutch company Excluton B.V., entails placing a ceramic tile in the cavity of an airtight press and concurrently forming it with a layer of concrete through pressing. This method yields a higher bending strength for the slabs, but a significant drawback is the high incidence of production defects, such as cracking of the ceramic tiles during pressing, attributable to imperfections in the planarity of the ceramic tiles. An additional disadvantage is the requirement to clean the ceramics post-molding to remove the cementitious milky residue that adheres to the face of the ceramic tile.

### SUMMARY

The present invention provides a method for manufacturing ceramic-concrete elements without the need for complex molds to join the ceramic tile to the concrete element. Pre-forming the concrete element separately from the ceramic tile allows for the use of standard technologies for forming concrete elements, creating an element with high strength and precision, and eliminating the risk of damaging the ceramic tile, as occurs with known technologies that form the concrete element on the ceramic tile.

The concrete element is bonded to the ceramic tile by means of a bonding layer. The connection between the ceramic and concrete elements is additionally sealed around the perimeter of the ceramic tile with a polymeric compound, which also acts as a temporary connection until the bonding layer sets.

It has been discovered that a sealing strip of a butyl rubber-based polymeric compound, in conjunction with the bonding layer, forms a durable, airtight bond between the ceramic tile and the concrete element. The butyl penetrates the pores of the concrete material, from which water is removed during the hydration process.

It is particularly advantageous if the concrete element and bonding layer are prepared using a porous aggregate, such as chalcedonite, allowing the butyl rubber-based sealing compound to penetrate the pores of the aggregate and form a durable elastic bond due to its large specific surface area. For the bonding of the butyl rubber-based sealant to the concrete element and bonding layer, it is essential to remove water from the interface between the materials. Some of the water in the concrete slab and bonding layer is consumed in the hydration process of the cements, while the remainder must be drained through the concrete structure. Thus, using porous aggregates with a pore structure similar to the capillary pores of concrete, such as chalcedonite, is preferable because the capillary rise effect efficiently transports water to the surface of the concrete element, moving it away from the sealant.

The method according to the invention can be efficiently carried out on an automated production line using uncomplicated equipment, without the need for molds known from the prior art, which prolonged the production process and complicated its automation.

One aspect of the invention relates to a method for manufacturing ceramic-concrete building elements that includes applying a strip of a polymeric sealing compound along the perimeter of a mounting surface of a ceramic tile, and then applying a bonding compound and a previously formed concrete element to the central part of the mounting surface of the ceramic tile. This method eliminates the need for complex molds and reduces the risk of damaging the ceramic tile during the manufacturing process, providing a strong and precise ceramic-concrete element.

A preferred embodiment of the invention involves applying the bonding compound to the ceramic tile before applying the concrete element. This approach offers the technical advantage of ensuring a uniform distribution of the bonding compound, which can enhance the adhesion between the ceramic tile and the concrete element.

Another preferred embodiment includes applying the bonding compound to the ceramic tile after applying the concrete element, through a pouring opening, into a space between the ceramic tile and the concrete element. This technique allows for precise filling of the space and creates a strong bond, which is particularly beneficial for elements with complex shapes or where the concrete element has already begun to cure.

A further preferred embodiment utilizes a freshly formed concrete element, whose curing process has not yet commenced, in the manufacturing method. The technical advantage of this approach is that the slight elasticity of the freshly formed concrete element allows for better conformity and adhesion to the bonding layer, resulting in a stronger ceramic-concrete element.

An additional preferred embodiment specifies the use of a polymeric sealing compound selected from butyl, silicone, acrylic, polyurethane, and asphalt-based compounds. The use of these materials provides a durable, airtight seal that protects the joint between the ceramic tile and the concrete element from water ingress and environmental factors.

A particularly advantageous embodiment involves the inclusion of a porous aggregate, such as chalcedonite, in the bonding compound. The technical advantage of using a porous aggregate is that it allows for better penetration of the sealing compound and forms a durable elastic bond, which is crucial for the longevity of the ceramic-concrete element.

In line with the previous embodiment, another preferred aspect includes using a porous aggregate, preferably chalcedonite, within the concrete element itself. The technical advantage here is that the capillary rise effect of the porous aggregate efficiently transports water to the surface of the concrete element, enhancing the bonding process and the overall durability of the ceramic-concrete element.

Another preferred embodiment dictates that the setting time of the bonding compound is longer than the hydration time of the concrete element. This feature provides the technical advantage of allowing the concrete element to cure without affecting the strength of the joint, which is essential for maintaining the integrity of the ceramic-concrete element under varying environmental conditions.

A further preferred embodiment specifies that the bonding compound has at least the consistency of class SF2 according to EN 12350-8 and adheres to the ceramic tile with a peel strength of at least 0.5 N/mm² in a pull-off test according to EN 12004:2017. This consistency and adhesion level ensure that the ceramic-concrete element can withstand significant stress and loading, which is a critical performance characteristic for building materials.

One aspect of the invention also includes a ceramic-concrete building element comprising a ceramic tile and a concrete element bonded with the ceramic tile by a bonding compound, wherein the bonding compound is surrounded by a strip of a polymeric sealing compound along the perimeter of the ceramic tile. This configuration provides a robust and durable building element suitable for various construction applications.

In one aspect of the invention the building element has a form of a layered slab comprising a ceramic tile connected to a concrete slab and a bonding compound surrounded by a strip of a polymeric sealing compound along the perimeter between the ceramic tile and the concrete slab.

In one aspect of the invention the building element has a form of a stair block comprising adjacent concrete blocks in a cuboidal shape, wherein two adjacent side surfaces have cavities bordered on three sides by flanges, and a third side wall has a longitudinal cut-out. The building element in a form of the stair block further comprises a tread ceramic tile abutting the side surfaces with two recesses opposite an opening formed by the longitudinal cut-outs and a riser ceramic tile adhering to the side surfaces with two other recesses, wherein the recesses between the ceramic tiles and the concrete blocks are filled with a bonding compound, which is surrounded by a strip of a polymeric sealing compound along the perimeter of the ceramic tiles.

Preferred embodiments of the ceramic-concrete building element include the use of specific polymeric sealing compounds, the inclusion of a porous aggregate in the bonding compound and concrete element, and specific configurations for layered slabs and stair blocks. Each of these embodiments offers distinct technical advantages, such as enhanced durability, improved water resistance, and increased structural integrity, making them suitable for a wide range of building applications.

### BRIEF DESCRIPTION OF DRAWINGS

The subject of the invention is depicted by means of example embodiments in the drawing, wherein:
FIG. 1 shows a general scheme of the method according to the invention;
FIGs. 2A-2B illustrate the successive steps of the first embodiment of the method for making a layered slab;
FIGs. 3A-3D illustrate the successive steps of the second embodiment of the method for making a stair block;
FIG. 4 depicts a corner step;
FIG. 5 depicts a post;
FIG. 6 depicts a left stair block and a right stair block;
FIG. 7 shows a diagram of a production line for implementing the method according to the first embodiment;
FIG. 8 shows a diagram of a production line for implementing the method according to the second embodiment.

### DETAILED DESCRIPTION

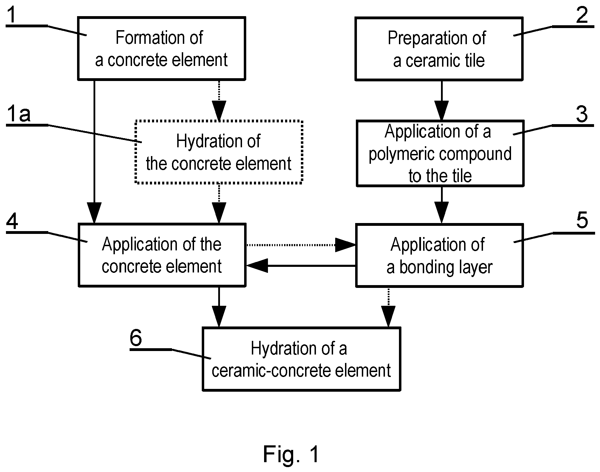

The method according to the invention is generally carried out according to the conceptual scheme shown in Fig. 1. In step 1, at least one concrete element is formed by a known method, which will become one of the components of the ceramic-concrete element to be manufactured. In step 1a, the concrete element may be left to hydrate.

In step 2, at least one ceramic tile is prepared, if necessary, to constitute the second component of the ceramic-concrete element to be manufactured. For example, the ceramic tile can be cut to the desired size in this step, if needed.

In step 3, a strip of a polymeric sealing compound is applied to the mounting surface of the ceramic tile, along its perimeter. The strip is applied as close to the outer edges as possible so that when the ceramic tile is joined to the concrete element, the compound is as close as possible to the edge of the finished element without protruding beyond its perimeter. A butyl, silicone, acrylic, polyurethane, or asphalt-based polymeric sealant is used as the sealant, which does not flow under its own weight and remains deformable until the concrete element is installed. The polymeric sealing compound is a sealant designed to limit the flow of the bonding layer applied at a later stage beyond the edge of the ceramic tile and to seal the joint between the ceramic tile and the concrete element during subsequent use of the ceramic-concrete element. Securing the edges against water ingress guarantees long-term use of the ceramic-concrete element, even in conditions where it is repeatedly exposed to freezing and thawing cycles. In addition, the polymer polymeric sealing compound provides a preliminary bond between the concrete element and the ceramic tile until the bonding layer has set and allows for intermediate transport of the ceramic-concrete building elements.

The bonding compound is then applied to the ceramic tile prepared in this way, on its central part of the mounting surface, inside the perimeter bounded by the sealing strip of the polymeric sealing compound, in step 5, followed by the freshly formed concrete element from step 1 in step 4. The sequence of steps 4 and 5 may vary, as will be discussed in the construction examples. Firstly, the bonding compound may be applied to the ceramic tile in step 5, and then the concrete element may be applied to the bonding compound in step 4. Alternatively, the concrete element may be applied to the ceramic tile in step 4, which has previously been hydrated in step 1a, and then the space between the concrete element and the ceramic tile may be filled with the bonding compound in step 5.

As a bonding compound, a composite based on cement, polymers, and fine aggregates is used, with a composition chosen such that its setting is delayed relative to the hydration of the concrete element. This solution eliminates the reduction in strength of the joint resulting from hydration shrinkage of the concrete element. The polymers used ensure the flexibility of the joint between the concrete element and the ceramic tile, which is exposed to temperature changes due to weather conditions, as different coefficients of thermal expansion of the materials can lead to a weakening of the joint. The bonding compound should have a consistency of at least class SF2 according to EN 12350-8 and adhesion to the ceramic tile guaranteeing a pull-off test peel strength of at least 0.5 N/mm² according to EN 12004:2017.

Preferably, for optimal bonding, a freshly molded concrete element (i.e., one in which the concrete maturation process has not yet begun) is used, which retains a slight elasticity after the molding stage, allowing the bonding layer to flow evenly under the weight of the concrete element and to match the adhering surfaces. However, this does not preclude the use of mature concrete elements for production.

The ceramic-concrete element thus formed is then transferred to the maturation room, where the hydration process in step 6 takes place under controlled conditions.

### First Embodiment of the Method: Production of a Ceramic-Concrete Layered Slab

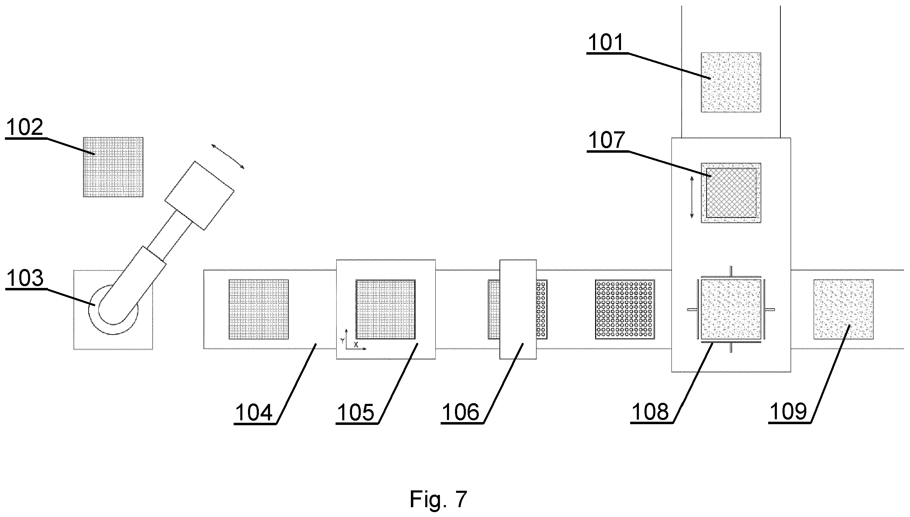

In accordance with the invention, a ceramic-concrete terrace slab was produced on the automated production line depicted in FIG. 7. This line consisted of a concrete slab 11 with a thickness of 30 mm and a ceramic tile 12 with a thickness of 10 mm. Both components measured 600 mm in width and length.

In the initial stage, the concrete slab 11 was formed by a conventional method using an airtight press and subsequently stored at station 101.

In step 3, a robot 103 retrieved a ceramic tile from the ceramic tile store 102 and conveyed it to a conveyor belt 104. At station 105, designated for the application of the polymeric sealing compound, a 5 mm wide and 3 mm high strip of butyl rubber-based sealing compound 14 was applied to the perimeter of the ceramic tile 12 on its mounting surface, maintaining a 3 mm distance from the edge.

Subsequently, in step 5, at station 106 for application of a bonding compound, a 1 dm³ quantity of bonding compound 13 was evenly distributed over the central part of the ceramic tile (12) at an area limited by the strip of the polymeric sealing material 14... The bonding compound 13 consisted of a mixture containing 27% cement, 6% redispersible powders, 35% chalcedonite aggregate with granulation up to 0.8 mm, 31% quartz sand with granulation between 0.1-0.3 mm, and 1% other additives (plasticizer, venting agent). The mixture was combined with water, which constituted 17% of the dry ingredients.

Using a transport suction cup 15/107, the concrete slab 11 was placed atop the prepared ceramic tile 12 in step 4. The concrete slab 11 and the ceramic tile 12 were then aligned using a centering device 108 to ensure their perimeters were congruent.

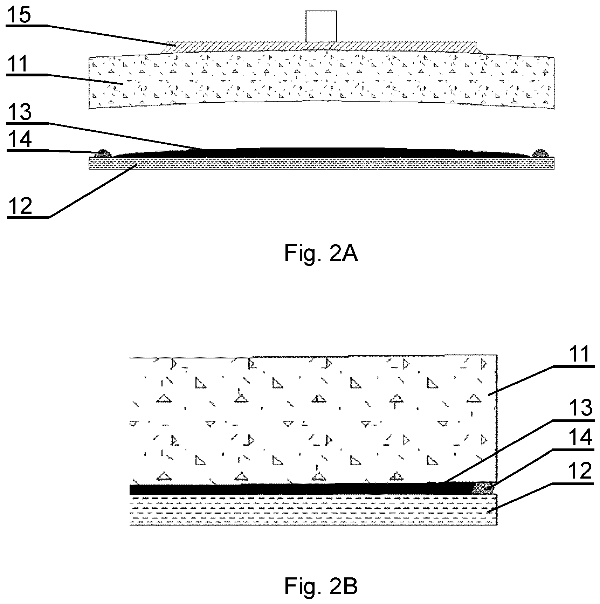

FIG. 2A illustrates the components during step 4, prior to joining, while FIG. 2B presents the components post-joining.

The joined elements 11 and 12 were transferred from the end 109 of the conveyor belt to the hydration station, where they underwent a 24-hour curing period under controlled conditions at 45°C and 100% humidity. Following this period, the ceramic-concrete building element was complete.

By placing the freshly formed concrete slab 11 onto the bonding layer 13 atop the ceramic tile 12, the bonding layer 13 was accurately distributed, allowing the layers 13, 14 to conform to the surface of the ceramic tile 12 under the weight of the concrete slab 11, which retained its elasticity immediately after formation. The polymeric sealing compound 14 served as a makeshift formwork, constraining the outward flow of the bonding layer 13 due to the weight of the concrete slab 11 while simultaneously pre-bonding the two elements 11, 12 for further transport.

The slab, produced using the aforementioned method in a 600x600 mm format with a thickness of 40 mm, achieved the following parameters:
- initial ceramic adhesion (according to EN 12004:2017 8.3.3.2): ≥1.0 N/mm²
- ceramic adhesion after water immersion (according to EN 12004:2017 8.3.3.3): ≥1.0 N/mm²
- ceramic adhesion after thermal aging (according to EN 12004:2017 8.3.3.4): ≥1.0 N/mm²
- ceramic adhesion after freeze-thaw cycles (according to EN 12004:2017 8.3.3.5): ≥1.0 N/mm²
- characteristic breaking load (according to EN 1339:2005 5.3.6): 7 kN

This method allows for the formation of ceramic-concrete layered slabs with varying surfaces and thicknesses, particularly layered slabs composed of concrete slabs 11 ranging from 20 to 80 mm in thickness and ceramic tiles 12 ranging from 5 to 30 mm in thickness, with surface areas from 0.09 to 1.44 m².

Such slabs are primarily utilized in residential surroundings as surfaces for terraces or driveways, as well as in public spaces.

### Second Embodiment of the Method: Making a Stair Block

The ceramic-concrete stair block presented in this example comprises two ceramic tiles (a tread 22A and a riser 22B) and one or more preformed concrete blocks 21A, 21B with dimensions tailored to the stair block.

The ceramic tiles are processed by a standard method (either prior to or during step 2 of the invention) and may feature rounded edges and notches (reliefs). A ceramic tile used as a tread 22A measures 300x600 mm and is 20 mm thick, with one rounded edge on the face side along a 600 mm length and a milled recess on the mounting side 10 mm from the edge, wherein the recess is 12 mm wide and 5 mm deep.

In the illustrated example, two concrete blocks 21A, 21B are used. It is also feasible to employ a single concrete block shaped by combining the forms of concrete blocks 21A and 21B. These concrete blocks 21A, 21B are fabricated in such a way that they function as disposable formwork.

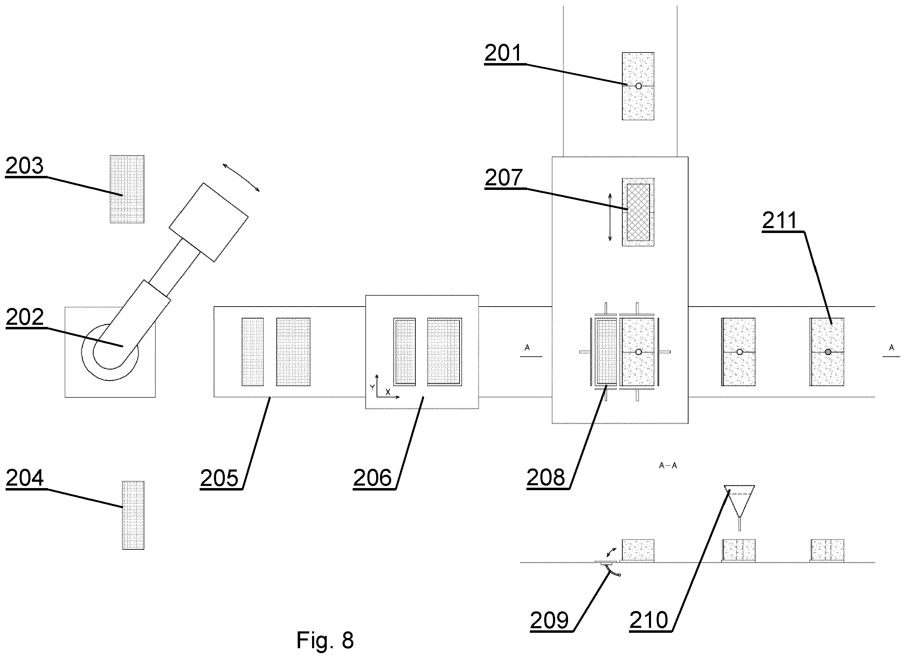

The method was executed on the automated production line depicted in FIG. 8 (with the lower part of the figure schematically representing a cross-section through section A-A of the line).

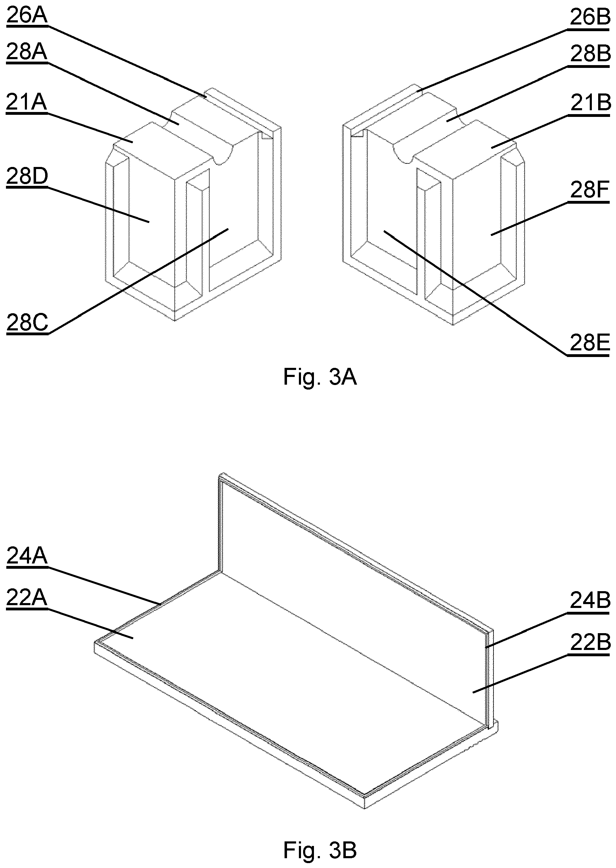

Concrete blocks 21A, 21B as shown in FIG. 3A were shaped in step 1 and hydrated in step 1a at station 201. While these concrete blocks 21A, 21B were formed by vibro-pressing in this example, it is also possible to create them by pressing or casting in molds. The block design accommodates a bonding layer ranging from 10 to 30 mm between the ceramic tiles and the concrete block.

Using robot 202, the tread tiles 22A were retrieved from station 203 and the riser tiles 22B from station 204, then positioned on the conveyor belt 205.

In step 3, an applicator 206 applied a strip of the polymeric sealing compound 24A to three edges at the mounting side of the tread tile 22A at the anticipated junction with the concrete blocks 21A, 21B, excluding the edge with the milled recess 27. A butyl-based polymeric sealing compound, 10 mm wide and 2 mm thick, was used. Additionally, a strip of the same polymeric sealing compound 24B, also 10 mm wide and 2 mm high, was applied to the riser tile 22B measuring 185x600 mm, excluding one 600 mm edge intended for insertion into the milled recess 27, using applicator 206. FIG. 3B illustrates the assembly of the ceramic tiles 22A and 22B.

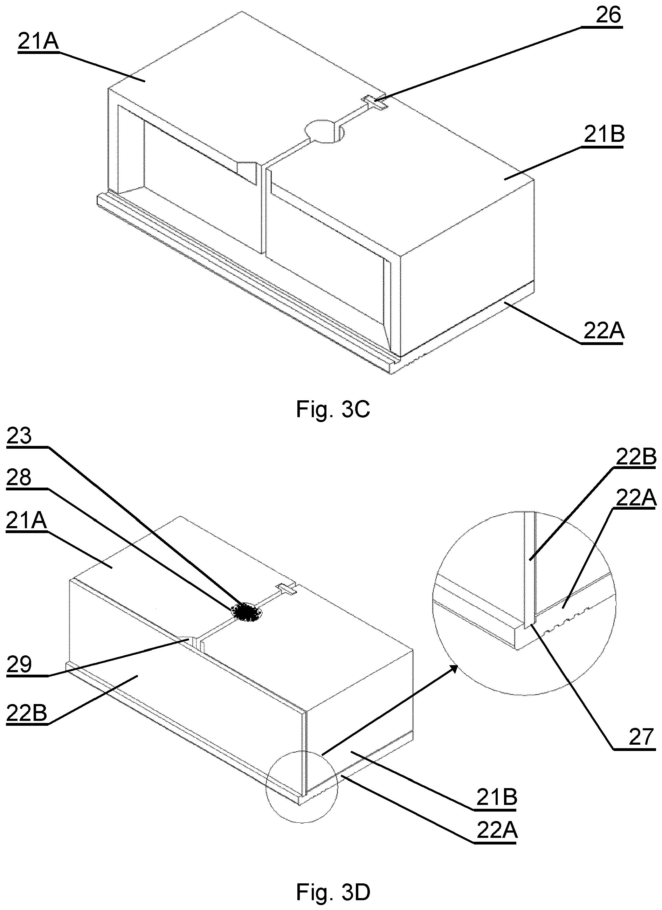

Next, in step 4, the previously formed and cured concrete blocks 21A, 21B were placed onto the tread tile 22A using gripper 207, as depicted in Fig. 3C. Due to the forming methods (pressing and vibro-pressing) not ensuring precise block height, a sealing partition 26 was implemented between the concrete blocks 21A, 21B, created by cut-outs 26A, 26B in the blocks. The riser tile 22B with a pre-applied strip of polymeric sealing compound 24B was then added using manipulator 209. A groove 27 on the mounting surface of the ceramic footer tile is recommended for better fitting of the two ceramic tiles. A variant without the groove is also viable, but would necessitate additional sealing with a polymeric sealing compound. The components were aligned using a centering device 208. Fig. 3D shows the assembled components.

In step 5, the previously prepared bonding compound 23 constituting a mixture of 30% cement, 1% redispersible powders, 46% chalcedonite aggregate with granulation up to 0.8 mm, 21% quartz sand with granulation between 0.1-0.3 mm, and 2% other additives (plasticizer, venting agent, anti-shrinkage agent, thickener), was poured through the opening 28 formed by the cut-outs 28A, 28B in the blocks using applicator 210. The mixture was combined with 17% water relative to the dry ingredients. Opening 29 allowed for venting of internal spaces during pouring. The high spreadability of the bonding compound ensured complete filling of the spaces 28C, 28D, 28E, 28F between the concrete blocks 21A, 21B and the ceramic tiles 22A, 22B. The polymeric sealing compound 24A, 24B provided an airtight joint and pre-bonded the individual elements, eliminating the need for complex molds.

The joined elements 21A, 21B, 22A, 22B were then transferred from the end 211 of the conveyor belt to the hydration station, where they were left for 24 hours at 20°C and 100% humidity. After this period, the ceramic-concrete stair block was ready for use.

A ceramic-concrete stair block measuring 600x300x200 mm was produced using this method.

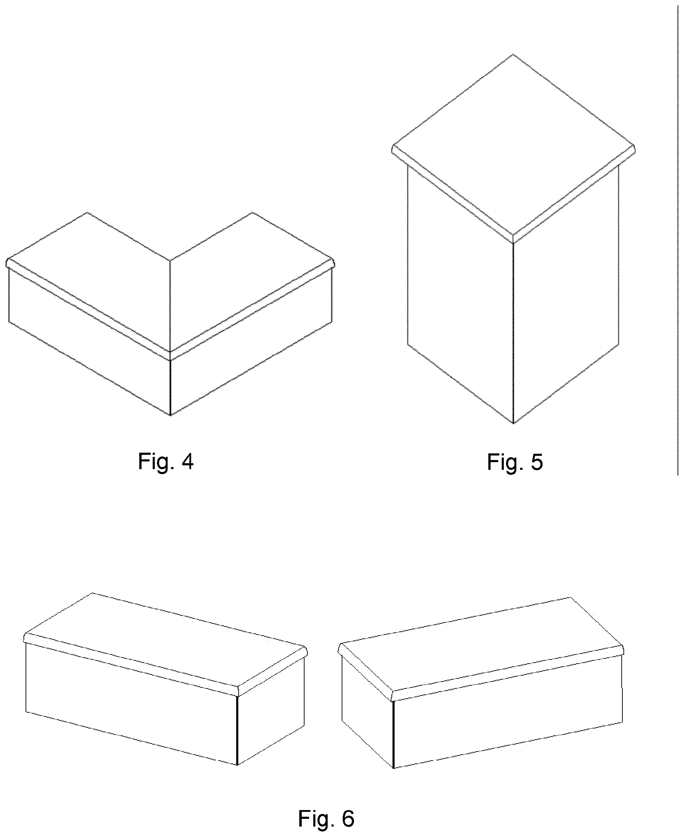

Other exemplary elements that can be fabricated using the method of the invention include corner treads as shown in FIG. 4, posts ending in a ceramic tile as depicted in FIG. 5, and both left and right stair blocks as illustrated in FIG. 6.

## Claims

1. A method for manufacturing a ceramic-concrete building element, **characterized in that** the method comprises:
- applying (3) a strip of a polymeric sealing compound (14, 24A, 24B) along a perimeter of a mounting surface of a ceramic tile (12, 22A, 22B); and
- applying (4, 5), to a central part of the mounting surface of the ceramic tile (12, 22A, 22B), the central part being previously surrounded by the strip of the polymeric sealing compound (14, 24A, 24B), a bonding compound (13, 23) and a previously formed concrete element (11, 21A, 21B).

2. The method according to claim 1, wherein the bonding compound (13) is applied to the ceramic tile (12) before the application of the concrete element (11).

3. The method according to claim 1, wherein the bonding compound (23) is applied to the ceramic tile (22A, 22B) after the application of the concrete element (21A, 21B), through a pouring opening (28), into a space between the ceramic tile (22A, 22B) and the concrete element (21A, 21B).

4. The method according to any of previous claims, wherein the concrete element (11) used is a freshly formed concrete element (11), whose curing process has not yet commenced.

5. The method according to of any of previous claims, wherein the polymeric sealing compound (14, 24A, 24B) is a compound based on butyl, silicone, acrylic, polyurethane, or asphalt.

6. The method according to claim 5, wherein an aggregate in the bonding compound (13, 23) constitutes a porous aggregate, wherein the porous aggregate is preferably chalcedonite.

7. The method according to claim 6 or 7, wherein an aggregate in the concrete element (11, 21A, 21B) constitutes a porous aggregate, wherein the porous aggregate is preferably chalcedonite.

8. The method according to any of previous claims, wherein the setting time of the bonding compound (13, 23) is longer than the hydration time of the concrete element (11, 21A, 21B).

9. The method according to any of previous claims, wherein the bonding compound (13, 23) has at least the consistency of class SF2 according to EN 12350-8 and adheres to the ceramic tile (12, 22A, 22B) with a pull strength of at least 0.5 N/mm² in a pull-off test according to EN 12004:2017.

10. A ceramic-concrete building element, comprising a ceramic tile (12, 22A, 22B); and a concrete element (11, 21A, 21B), **characterized in that** the ceramic tile (12, 22A, 22B) is bonded with the concrete element (11, 21A, 21B) by a bonding compound (13, 23), wherein the bonding compound (13, 23) is surrounded by a strip of a polymeric sealing compound (14, 24A, 24B) along a perimeter of the ceramic tile (12, 22A, 22B).

11. The building element according to claim 10, wherein the polymeric sealing compound (14, 24A, 24B) is a compound based on butyl, silicone, acrylic, polyurethane, or asphalt.

12. The building element according to claim 10 or 11, wherein an aggregate in the bonding compound (13, 23) constitutes a porous aggregate, wherein the porous aggregate is preferably chalcedonite.

13. The building element according to any of claims from 10 to 12, wherein an aggregate in the concrete element (11, 21A, 21B) constitutes a porous aggregate, wherein the porous aggregate is preferably chalcedonite.

14. The building element according to any of claims from 10 to 13, wherein the building element is a layered slab comprising a ceramic tile (12) bonded to a concrete slab (11) and a bonding compound (13) surrounded by a strip of a polymeric sealing compound (14) along the perimeter, between the ceramic tile (12) and the concrete slab (11).

15. The building element according to any of claims from 10 to 14, wherein the building element has a form of a stair block with adjacent concrete blocks (21A, 21B) in a cuboidal shape wherein on two adjacent side surfaces of the concrete blocks (21A, 21B) there are recesses (28C, 28D; 28E, 28F) surrounded by flanges on three sides, and in the third side wall there is a longitudinal cutout (28A, 28B), wherein the ceramic tiles (22A, 22B) constitute a cladding for adjacent concrete blocks (21A, 21B) and the tread ceramic tile (22A) is abutting the side surfaces with two recesses (28C, 28E) opposite the opening (28) formed by the longitudinal cutouts (28A, 28B), and the riser ceramic tile (22B) is abutting the side surfaces with the other two recesses (28D, 28F), wherein in the recesses (28C, 28D, 28E, 28F) between the ceramic tiles (22A, 22B) and the concrete blocks (21A, 21B) there is a bonding compound (23) surrounded by a strip of sealing polymer compound (24A, 24B) along the perimeter of the ceramic tiles (22A, 22B).
